# FASCICULE DE BREVET EUROPEEN

(11) **EP 1 372 811 B1**
(45) Date de publication et mention de la délivrance du brevet: **14.12.2005**
(21) Numéro de dépôt: 02718267.4
(22) Date de dépôt: 15.03.2002
(51) Int. Cl.: B01D 29/15, B01D 29/92, B01D 29/96, B01D 35/153, B01D 35/16, B01D 36/00

(54) **ELEMENT CYLINDRIQUE A AILETTES INCLINEES POUR ELEMENT FILTRANT ET ENSEMBLE DE FILTRAGE CORRESPONDANT**
ZYLINDRISCHES ELEMENT MIT GENEIGTEN FLÜGELN FÜR FILTERELEMENT UND ENTSPRECHENDE FILTERVORRICHTUNG
CYLINDRICAL ELEMENT WITH SLOPING FINS FOR FILTERING ELEMENT AND CORRESPONDING FILTERING ASSEMBLY

(30) Priorité: 23.03.2001 FR 0103990
(43) Date de publication de la demande: 02.01.2004
(73) Titulaire: FLEETGUARD, 29556 Quimper Cédex 9 (FR)
(72) Inventeur: MALGORN, Gérard, F-29000 Quimper (FR); LE MEN, Gildas, F-29180 Quengat (FR)
(74) Mandataire: Vidon, Patrice
(86) Numéro de dépôt international: PCT/FR2002/000942
(87) Numéro de publication internationale: WO 2002/076569

(56) Documents cités:
- EP-A- 0 713 720
- DE-A- 4 430 341
- DE-A- 19 930 292
- US-A- 3 662 893

## Description

L'invention concerne le domaine de la conception et de la réalisation des ensembles de filtrage utilisés pour filtrer les liquides circulant dans les moteurs ou les équipements hydrauliques.

De tels ensembles de filtrage sont constitués par un corps de filtre à l'intérieur duquel est disposée une cartouche de filtrage, qui présente généralement une forme cylindrique et qui inclut un medium de filtration, pouvant par exemple être en papier, en carton ou encore en feutre. Ce médium de filtration est classiquement délimité par deux flasques d'extrémité.

De telles cartouches de filtration coopèrent généralement avec un tube central, solidaire ou non des flasques, dont le diamètre extérieur avoisine le diamètre intérieur du medium de filtration de façon à limiter les déformations du medium sous l'effet de la pression s'exerçant à l'intérieur de l'ensemble de filtrage.

Les flasques inférieurs peuvent se prolonger pour présenter des moyens de mise en place et de maintien de la cartouche dans l'ensemble de filtrage. Alternativement, on connaît des ensembles de filtrage mettant en oeuvre un tube support sur lequel est rapportée la cartouche de filtration, le tube étant monté à demeure dans l'ensemble de filtrage.

Dans ce deuxième cas de figure, on connaît notamment, selon le document DE - 44 30 341, des ensembles de filtrage mettant en oeuvre un tube support présentant une nervure hélicoïdale irrégulière. Ce tube présente en outre plusieurs orifices en sa partie supérieure pour collecter le fluide filtré et l'acheminer par le conduit interne du tube, vers un conduit d'évacuation du liquide filtré ménagé à la base de l'ensemble de filtrage.

Un tel tube présente plusieurs inconvénients.

En particulier, lors de la mise en place de la cartouche de filtration sur le tube support déjà présent dans l'ensemble de filtrage, la nervure du tube engendre une résistance à l'introduction du tube lors de son passage à l'intérieur du joint pré-monté sur le flasque inférieur de la cartouche. Il en va de même au moment de l'extraction de la cartouche en vue de son remplacement.

En second lieu, l'évacuation du liquide filtré n'est possible que par les orifices ménagés dans la partie supérieure du tube. Le liquide filtré parvenant à la base du tube doit donc suivre le cheminement hélicoïdal pour remonter jusqu'aux orifices. L'évacuation n'étant pas permise sur toute la hauteur du tube, la pression à l'intérieur de l'ensemble de filtrage a tendance à augmenter, au détriment de la longévité de la cartouche de filtration, voire, à terme, de la qualité de la filtration.

L'invention a notamment pour objectif de pallier les inconvénients de l'état de l'art antérieur.

Plus précisément, l'invention a pour objectif de fournir un élément cylindrique destiné à supporter et à maintenir une cartouche de filtration, cet élément cylindrique facilitant la mise en place et le retrait de la cartouche à l'intérieur d'un ensemble de filtrage.

L'invention a également pour objectif de proposer un tel élément qui favorise l'écoulement du liquide filtré vers le conduit d'évacuation de l'ensemble de filtrage, ceci sur quasiment toute la hauteur de l'ensemble de filtrage.

Un autre objectif de l'invention est de proposer un tel élément qui favorise le retour du liquide, lors du changement de cartouche, vers le réservoir de liquide.

L'invention a aussi pour objectif de fournir un tel élément qui permette le dégazage de l'élément de filtrage lors du remplissage en liquide de l'ensemble de filtrage.

Encore un autre objectif de la présente invention est de proposer un tel élément qui puisse être fabriqué aisément et en grandes séries.

Ces différents objectifs ainsi que d'autres qui apparaîtront par la suite sont atteints à l'aide d'un élément cylindrique destiné à supporter une cartouche de filtration dans un ensemble de filtrage pour liquide circulant dans un moteur ou un équipement hydraulique, ladite cartouche comprenant un médium de filtration délimité par deux flasques. Selon l'invention, l'élément cylindrique comprend au moins deux nervures longitudinales à partir desquelles s'étendent une succession d'ailettes inclinées dans le sens d'écoulement du liquide filtré.

Contrairement à l'art antérieur, une telle configuration des ailettes favorise, ou à tout le moins facilite, l'introduction de l'élément cylindrique dans la cartouche de filtration, ou son retrait. En effet, le joint pré-monté sur le flasque inférieur de la cartouche est, lors de la mise en place ou de l'enlèvement de la cartouche, continuellement maintenu en appui sur les nervures et au moins deux des ailettes du tube.

On notera que les nervures et/ou les ailettes peuvent s'étendre sur tout ou partie de la hauteur de l'élément cylindrique.

Préférentiellement, lesdites ailettes sont inclinées dans le sens d'écoulement du liquide filtré.

Selon une solution avantageuse, lesdites ailettes se répartissent de façon sensiblement symétrique de part et d'autre desdites nervures.

Selon une solution préférentielle, lesdites ailettes s'étendant à partir d'une desdites nervures sont disposées en quinconce par rapport aux ailettes s'étendant à partir d'une nervure voisine.

D'autres modes de réalisation peuvent toutefois être envisagés sans sortir du cadre de l'invention, les ailettes pouvant s'étendre de façon non symétrique, par exemple en quinconce, de part et d'autre des nervures.

En outre, l'angle formé entre les ailettes et les nervures peut être variable, et pourra notamment être adapté en fonction du nombre d'ailettes, du nombre de nervures, du diamètre de l'élément cylindrique ou autres.

Préférentiellement, l'élément cylindrique comprend quatre nervures.

On obtient ainsi une bonne répartition des ailettes à la surface de l'élément cylindrique. Cependant, le nombre de nervures pourra être modifié en fonction des besoins sans sortir du cadre de l'invention.

Avantageusement, l'élément cylindrique comprend au moins un orifice d'évacuation susceptible de communiquer avec un conduit de sortie dudit fluide filtré ménagé dans ledit ensemble de filtrage.

Selon une solution avantageuse, l'élément cylindrique comprend au moins un orifice de drainage susceptible de communiquer avec un conduit ménagé dans ledit ensemble de filtrage pour le retour dudit liquide au réservoir dudit moteur ou dudit équipement hydraulique.

Cette disposition s'avère particulièrement efficace pour vidanger l'ensemble de filtrage au moment du remplacement de la cartouche de filtration, lorsque cette dernière libère l'orifice de drainage.

Selon une autre caractéristique, l'élément cylindrique comprend un évidement central débouchant à ses deux extrémités et forme ainsi un tube.

On obtient ainsi un conduit central sur toute la longueur du tube, ce conduit pouvant être mis en relation ou non avec d'autres conduits (évacuation de liquide filtré, retour au réservoir, dégazage...) selon les fonctions souhaitées.

Selon une solution avantageuse, ledit orifice de drainage communique avec ledit évidement central.

On obtient ainsi une configuration de l'élément cylindrique simple et efficace.

Selon une solution préférentielle, ledit évidemment central est susceptible de communiquer, d'une part, avec un évent ménagé dans le flasque supérieur de ladite cartouche de filtration, d'autre part avec ledit conduit ménagé dans ledit ensemble de filtrage pour le retour dudit liquide au réservoir dudit moteur ou dudit équipement hydraulique.

Le conduit central de l'élément cylindrique est ainsi utilisé pour une fonction de dégazage de l'ensemble de filtrage, opérant notamment au moment du remplissage en liquide de l'ensemble de filtrage.

Grâce à l'ensemble des ces caractéristiques, on obtient ainsi un élément cylindrique, combinant trois fonctions : support de la cartouche, dégazage et drainage du liquide à vidanger.

Préférentiellement, l'inclinaison des ailettes par rapport aux nervures est comprise entre 30° et 60°.

L'invention concerne également un ensemble de filtrage intégrant un élément cylindrique tel que décrit précédemment et une cartouche de filtration comprenant un medium de filtration délimité par deux flasques.

D'autres caractéristiques et avantages de l'invention apparaîtront plus clairement à la lecture de la description suivante de deux modes de réalisation préférentiels de l'invention donnés à titre d'exemples illustratifs et non limitatifs, et des dessins parmi lesquels :
- la figure 1 illustre en coupe un ensemble de filtrage intégrant un élément cylindrique selon l'invention ;
- les figures 2 et 3 procurent respectivement une vue en perspective et une vue en coupe d'un élément cylindrique selon un premier mode de réalisation de l'invention dans lequel les ailettes s'étendent vers le bas à partir des nervures ;
- les figures 4 et 5 procurent des vues respectivement selon les coupes F-F et D-D de l'élément cylindrique illustré par la figure 3 ;
- la figure 6 procure une vue selon la coupe E-E de l'élément cylindrique illustré par la figure 3 ;
- les figures 7 et 8 procurent respectivement une vue en coupe et une vue en perspective d'un élément cylindrique selon un deuxième mode de réalisation de l'invention dans lequel les ailettes s'étendent vers le haut à partir des nervures.

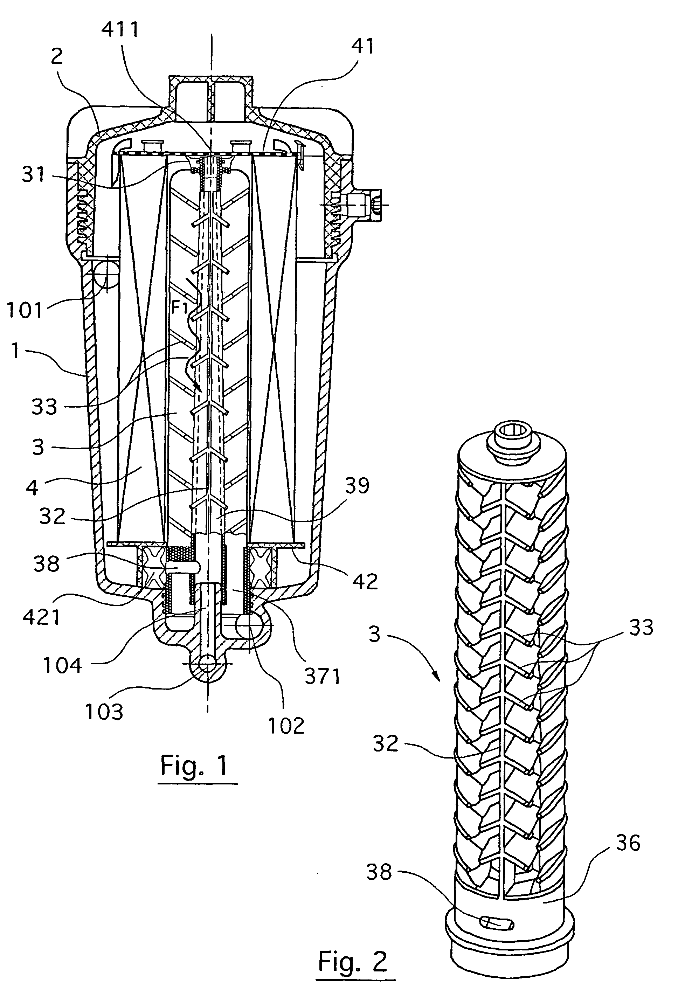

En référence à la figure 1, un ensemble de filtrage pour liquide circulant dans un moteur ou un équipement hydraulique comprend une cuve 1 et un couvercle 2 délimitant un volume à l'intérieur duquel est monté un élément cylindrique 3 formant tube qui supporte une cartouche de filtration comprenant un medium de filtration 4 délimité par un flasque supérieur 41 et un flasque inférieur 42.

La cuve 1 comprend un orifice d'admission 101 de liquide, un orifice 102 d'un conduit de sortie de liquide filtré, un orifice 103 d'un conduit de retour au réservoir de liquide.

L'élément cylindrique 3 est monté et maintenu au fond de la cuve par une double liaison annulaire. La cartouche de filtration est emmanchée sur l'élément cylindrique 3 et supportée de façon étanche sur celui-ci à l'aide d'un joint 31 monté sur une extrémité de l'élément cylindrique 3 et d'un joint 421 pré-monté dans un logement prévu à cet effet dans le flasque inférieur 42.

Selon un premier mode de réalisation de l'invention, l'élément cylindrique 3 comprend quatre nervures 32 à partir desquelles s'étendent des ailettes 33 inclinées vers le bas, cette inclinaison correspondant au sens d'écoulement du liquide filtré.

Les ailettes s'étendent de la nervure en formant un angle d'environ 45 ° (cet angle pourra être différent dans d'autres modes de réalisation).

L'élément cylindrique 3 est une pièce monobloc réalisée en matière plastique ou composite (ou tout autre matériau similaire) par un procédé de moulage. Dans d'autres modes de réalisation envisageables, l'élément cylindrique pourra être réalisé dans d'autres matériaux, notamment métalliques (par exemple, un alliage de zinc).

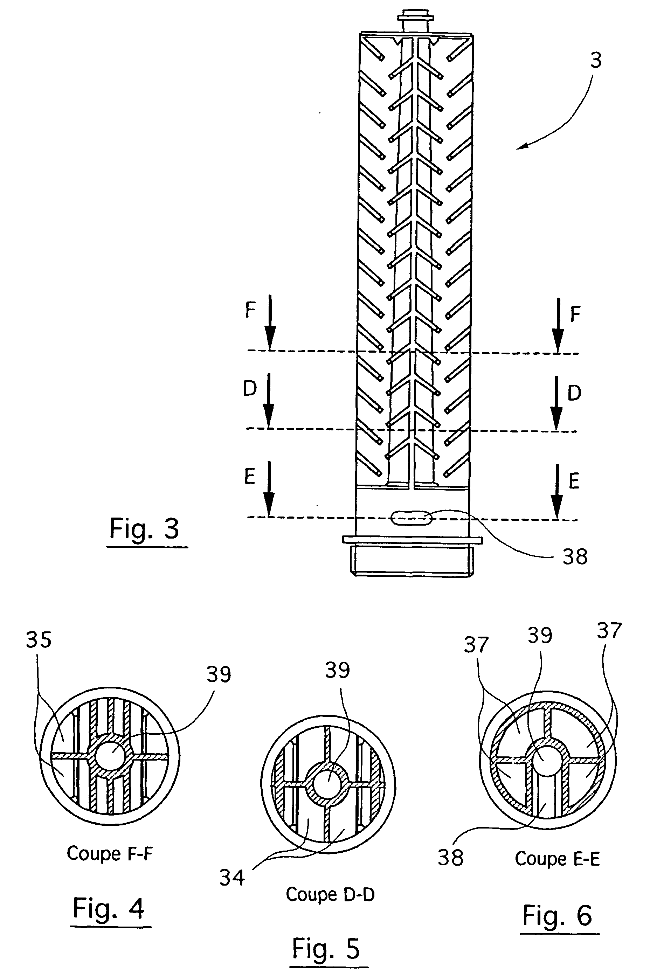

Comme on le remarque sur les figures 1 et 2, les ailettes 33 s'étendent symétriquement de part et d'autre des nervures 32, les ailettes s'étendant à partir d'une nervure étant disposées en quinconce par rapport aux ailettes s'étendant à partir d'une nervure voisine. Le liquide filtré s'écoule ainsi le long d'un chemin sinueux tel qu'illustré par la flèche F1, passant successivement par les espaces 34, 35 respectivement illustrés par les figures 5 et 4.

En référence à la figure 6, la base 36 de l'élément cylindrique 3 présente une section dans laquelle sont ménagés quatre orifices d'évacuation 37 susceptibles de communiquer, par l'intermédiaire du volume annulaire 371, avec l'orifice 102 de sortie de liquide filtré ménagé dans la cuve 1.

Tel que représenté à la figure 6, l'élément cylindrique 3 présente en outre un orifice de drainage 38 communiquant, par l'intermédiaire du conduit 104, avec l'orifice 103 de retour au réservoir de liquide. Lors de l'extraction de la cartouche de filtration, cet orifice de drainage 38, alors libéré, permet l'écoulement du liquide contenu dans la cuve 1 jusqu'à vidange complète ou quasi complète de la cuve.

Dans le présent mode de réalisation, l'orifice 38 débouche dans l'évidement central 39 de l'élément cylindrique 3. Tel que représenté sur la figure 1, cet évidement central 39, délimité par les lignes en traits pointillés, débouche aux deux extrémités de l'élément cylindrique 3.

A la base de l'élément cylindrique 3, l'évidement central 39 communique, d'une part, avec l'orifice de drainage 38, d'autre part, avec le conduit 104 communiquant lui-même avec le réservoir de liquide.

A l'extrémité supérieure de l'élément cylindrique 3, l'évidement central 39 communique avec un évent 411 ménagé sensiblement au centre du flasque supérieur 41.

Ainsi, lors du remplissage en liquide de l'ensemble de filtrage, l'air contenu dans la cuve passe par l'évent 411, puis par l'évidement central 39 pour être redirigé vers le réservoir de liquide. Les dimensions de l'évent 411, de l'ordre de 0,5 mm, permettent de limiter, et de rendre acceptable, la fuite de liquide non filtré qui retourne au réservoir.

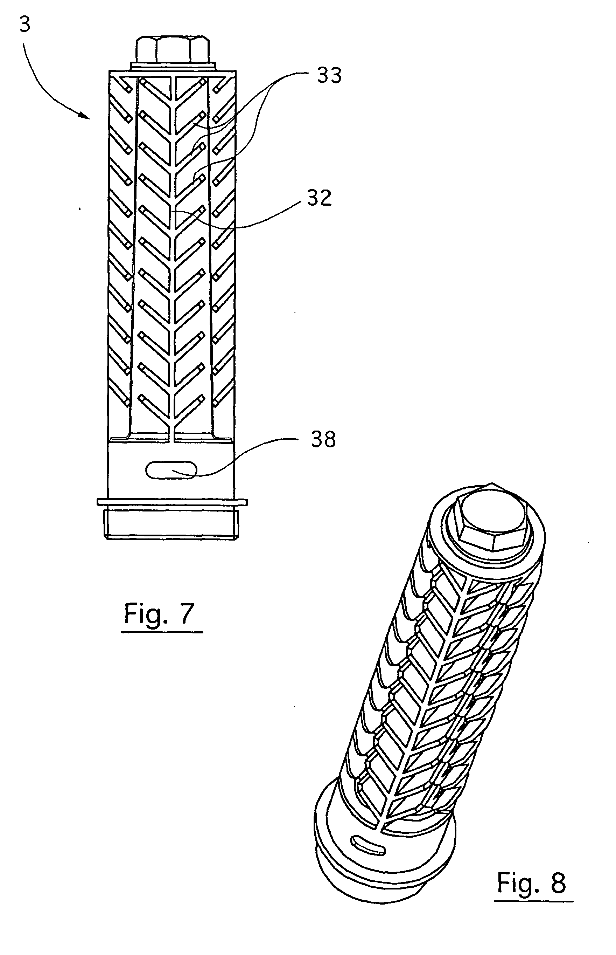

Selon un deuxième mode de réalisation illustré par les figures 7 et 8, l'élément cylindrique 3 comprend quatre nervures 32 à partir desquelles s'étendent des ailettes 33 inclinées vers le haut.

## Revendications

1. Elément cylindrique destiné à supporter une cartouche de filtration dans un ensemble de filtrage pour liquide circulant dans un moteur ou un équipement hydraulique, **caractérisé en ce qu'**il comprend au moins deux nervures longitudinales (32) à partir desquelles s'étendent une succession d'ailettes (33) inclinées.

2. Elément (3) selon la revendication 1, **caractérisé en ce** lesdites ailettes (33) se répartissent de façon sensiblement symétrique de part et d'autre desdites nervures (32).

3. Elément (3) selon l'une quelconque des revendications 1 ou 2, **caractérisé en ce que** lesdites ailettes (33) s'étendant à partir d'une desdites nervures sont disposées en quinconce par rapport aux ailettes (33) s'étendant à partir d'une nervure voisine.

4. Elément (3) selon l'une quelconque des revendications 1 à 3, **caractérisé en ce qu'**il comprend quatre nervures (32).

5. Elément (3) selon l'une quelconque des revendications 1 à 4, **caractérisé en ce qu'**il comprend au moins un orifice d'évacuation (37).

6. Elément (3) selon l'une quelconque des revendications 1 à 5, **caractérisé en ce qu'**il comprend au moins un orifice de drainage (38).

7. Elément (3) selon l'une quelconque des revendications 1 à 6, **caractérisé en ce qu'**il comprend un évidement central (39) débouchant à ses deux extrémités.

8. Elément (3) selon les revendications 6 et 7, **caractérisé en ce que** ledit orifice de drainage (38) communique avec ledit évidement central (39).

9. Elément (3) selon l'une quelconque des revendication 1 à 8, **caractérisé en ce que** l'inclinaison des ailettes (33) par rapport aux nervures (32) est comprise entre 30° et 60°.

10. Ensemble de filtrage intégrant un élément cylindrique (3) selon l'une quelconque des revendications 1 à 9 et une cartouche de filtration comprenant un medium (4) de filtration délimité par deux flasques (41, 42), lesdites ailettes (33) de l'élément cylindrique étant inclinées dans le sens d'écoulement du liquide filtré.

11. Ensemble de filtrage selon la revendication 10 intégrant un élément cylindrique selon la revendication 5 **caractérisé en ce que** ledit au moins un orifice d'évacuation (37) de l'élément cylindrique (3) communique avec un conduit de sortie (102) dudit fluide filtré ménagé dans ledit ensemble de filtrage.

12. Ensemble de filtrage selon la revendication 10 ou 11 intégrant un élément cylindrique selon la revendication 6 en ce que ledit au moins un orifice de drainage (38) de l'élément cylindrique (3) communique avec un conduit (104) ménagé dans ledit ensemble de filtrage pour le retour dudit liquide au réservoir dudit moteur ou dudit équipement hydraulique.

13. Ensemble de filtrage selon la revendication 12 intégrant un élément cylindrique selon la revendication 7 en ce que ledit évidemment central (39) dudit élément cylindrique (3) communique, d'une part, avec un évent (411) ménagé dans le flasque supérieur (41) de ladite cartouche de filtration, et d'autre part avec ledit conduit (104) ménagé dans ledit ensemble de filtrage pour le retour dudit liquide au réservoir dudit moteur ou dudit équipement hydraulique.

## Patentansprüche

1. Zylindrisches Element, das dazu bestimmt ist, eine Filterpatrone in einer Filtereinheit für in einem Motor oder einer Hydraulikanlage zirkulierende Flüssigkeit abzustützen, **dadurch gekennzeichnet, dass** es mindestens zwei Längsrippen (32) umfasst, von denen aus sich eine Reihe von geneigten Stegen (33) erstreckt.

2. Element (3) nach Anspruch 1, **dadurch gekennzeichnet, dass** sich die Stege (33) in im Wesentlichen symmetrischer Weise beiderseits der Rippen (32) verteilen.

3. Element (3) nach einem der Ansprüche 1 oder 2, **dadurch gekennzeichnet, dass** die Stege (33), die sich von einer der Rippen aus erstrecken, in Bezug zu den Stegen (33), die sich von einer benachbarten Rippe aus erstrecken, versetzt angeordnet sind.

4. Element (3) nach einem der Ansprüche 1 bis 3, **dadurch gekennzeichnet, dass** es vier Rippen (32) umfasst.

5. Element (3) nach einem der Ansprüche 1 bis 4, **dadurch gekennzeichnet, dass** es mindestens eine Ausströmöffnung (37) umfasst.

6. Element (3) nach einem der Ansprüche 1 bis 5, **dadurch gekennzeichnet, dass** es mindestens eine Entleerungsöffnung (38) umfasst.

7. Element (3) nach einem der Ansprüche 1 bis 6, **dadurch gekennzeichnet, dass** es eine an seinen beiden Enden mündende mittige Ausnehmung (39) umfasst.

8. Element (3) nach den Ansprüchen 6 und 7, **dadurch gekennzeichnet, dass** die Entleerungsöffnung (38) mit der mittigen Ausnehmung (39) kommuniziert.

9. Element (3) nach einem der Ansprüche 1 bis 8, **dadurch gekennzeichnet, dass** die Neigung der Stege (33) in Bezug zu den Rippen (32) zwischen 30° und 60° liegt.

10. Filtereinheit, enthaltend ein zylindrisches Element (3) nach einem der Ansprüche 1 bis 9 und eine Filterpatrone, die ein von zwei Flanschen (41, 42) begrenztes Filtermedium (4) umfasst, wobei die Stege (33) des zylindrischen Elements in der Strömungsrichtung der gefilterten Flüssigkeit geneigt sind.

11. Filtereinheit nach Anspruch 10, enthaltend ein zylindrisches Element nach Anspruch 5, **dadurch gekennzeichnet, dass** die mindestens eine Ausströmöffnung (37) des zylindrischen Elements (3) mit einem in der Filtereinheit vorgesehenen Auslasskanal (102) für das in gefilterte Fluid kommuniziert.

12. Filtereinheit nach Anspruch 10 oder 11, enthaltend ein zylindrisches Element nach Anspruch 6, **dadurch gekennzeichnet, dass** die mindestens eine Entleerungsöffnung (38) des zylindrischen Elements (3) mit einem in der Filtereinheit vorgesehenen Kanal (104) zur Rückführung der Flüssigkeit zum Speicher des Motors oder der Hydraulikanlage kommuniziert.

13. Filtereinheit nach Anspruch 12, enthaltend ein zylindrisches Element nach Anspruch 7, **dadurch gekennzeichnet, dass** die mittige Ausnehmung (39) des zylindrischen Elements (3) einerseits mit einer im oberen Flansch (41) der Filterpatrone vorgesehenen Lüftungsöffnung (411) und andererseits mit dem in der Filtereinheit vorgesehenen Kanal (104) zur Rückführung der Flüssigkeit zum Speicher des Motors oder der Hydraulikanlage kommuniziert.

## Claims

1. Cylindrical element which is designed to support a filtering cartridge in a filtering assembly for fluid which circulates in a motor or in hydraulic equipment, **characterised in that** it comprises at least two longitudinal ribs (32) from which a succession of inclined fins (33) extends.

2. Element (3) according to claim 1, **characterised in that** the said fins (33) are distributed substantially symmetrically on both sides of the said ribs (32).

3. Element (3) according to claim 1 or claim 2, **characterised in that** the said fins (33) which extend from one of the said ribs are disposed staggered relative to the fins (33) which extend from an adjacent rib.

4. Element (3) according to any one of claims 1 to 3, **characterised in that** it comprises four ribs (32).

5. Element (3) according to any one of claims 1 to 4, **characterised in that** it comprises at least one discharge aperture (37).

6. Element (3) according to any one of claims 1 to 5, **characterised in that** it comprises at least one drainage aperture (38).

7. Element (3) according to any one of claims 1 to 6, **characterised in that** it comprises a central recess (39) which opens at both its ends.

8. Element (3) according to claim 6 and claim 7, **characterised in that** the said drainage aperture (38) communicates with the said central recess (39).

9. Element (3) according to any one of claims 1 to 8, **characterised in that** the inclination of the fins (33) relative to the ribs (32) is between 30° and 60°.

10. Filtering assembly incorporating a cylindrical element (3) according to any one of claims 1 to 9 and a filtering cartridge comprising a filtering medium (4) which is delimited by two flanges (41, 42), the said fins (33) of the cylindrical element being inclined in the direction of flow of the filtered fluid.

11. Filtering assembly according to claim 10, incorporating a cylindrical element according to claim 5, **characterised in that** the said at least one discharge aperture (37) of the cylindrical element (3) communicates with an output duct (102) for the said filtered fluid which is provided in the said filtering assembly.

12. Filtering assembly according to claim 10 or claim 11, incorporating a cylindrical element according to claim 6, wherein the said at least one drainage aperture (38) of the cylindrical element (3) communicates with a duct (104) which is provided in the said filtering assembly for the return of the said fluid to the reservoir of the said motor or the said hydraulic equipment.

13. Filtering assembly according to claim 12, incorporating a cylindrical element according to claim 7, wherein the said central recess (39) of the said cylindrical element (3) communicates firstly with a vent (411) which is provided in the upper flange (41) of the said filtering cartridge, and secondly with the said duct (104) which is provided in the said filtering assembly for the return of the said fluid to the reservoir of the said motor or the said hydraulic equipment.
